# EUROPEAN PATENT APPLICATION

(11) **EP 2 682 654 A1**
(43) Date of publication of application: **08.01.2014**
(21) Application number: 12751954.4
(22) Date of filing: 31.01.2012
(51) Int. Cl.: F16K 11/052

(54) **BUTTERFLY VALVE**

(30) Priority: 02.03.2011 ES 201130225
(71) Applicant: Angodos, S.L., 28946 Fuenlabrada (Madrid) (ES)
(72) Inventor: GOMEZ PEREZ, Antonio, E-28946 Fuenlabrada (Madrid) (ES)
(74) Representative: Munoz Garcia, Antonio
(86) International application number: PCT/ES2012/070062
(87) International publication number: WO 2012/117137

(57) **Abstract**

The invention relates to a butterfly valve, designed specially for the water transport and control sector. The valve comprises a stainless-steel valve body and a butterfly disc as closure element on an elastomer gasket (3) established in the valve body, the invention focuses on the fact that said elastomer gasket has a supporting front for the completely planar and conical butterfly disc, said elastomer gasket being assembled on a side of the valve body, a metal core (4), a compensation ring (5) and a fastening screw (6) threaded on the valve body cooperating in the fastening, such that the closure is completely sealed and the gasket can be disassembled without needing to dismantle the valve and without requiring tools or a qualified technician to that end.

## Description

### Object of the Invention

The present invention relates to a butterfly valve preferably and fundamentally provided for the water transport and control sector, being able to be assembled in pumping stations, large tanks, drinking water pipes, irrigation pipes, etc.

The object of the invention is to provide a butterfly valve for the applications mentioned above, in which the closure is completely sealed, the corresponding elastomer gasket on which the butterfly component rests in order to achieve closure being able to be disassembled without needing to dismantle the valve and without even requiring tools or a qualified technician.

### Background of the Invention

It is a fact that the closure of butterfly valves loses watertightness over time due to wear, malformations, inappropriate frictions, etc., which entails a very significant maintenance cost.

To solve that problem, Spanish Utility Model U 9203497 of the same applicant describes a butterfly valve with an optimum sealing system, based on the fact that there is assembled directly on the valve body a vulcanized gasket with a semi O-ring flange facing the surface contacting the butterfly component of the closure, such that based on this solution an optimum sealing in the use of the valve with an unlimited duration is achieved.

Nevertheless, the use of said valve is limited to specific applications, needing tools for the disassembling of the gasket formed by the elastomer, in addition to the need of having to carry out a partial disassembling of the valve for removing or assembling of a new elastomer gasket.

### Description of the Invention

The proposed butterfly valve has a series of particularities which allow solving the problems described in the preceding section and further offering new features completely unknown until now.

More specifically, the valve of the invention comprises, as is conventional, a fixed part corresponding to the valve body made of stainless-steel and on which the corresponding sealing gasket sits, the latter being assembled with the cooperation of a metal core, a screw and a compensation ring, the supporting front of the gasket being conical in shape so that the support and closure which must be achieved by the corresponding butterfly component produces a complete sealing of unlimited duration.

The other part of the valve is the mobile part and based on said part, it is possible to change the distance between the faces of the valve, which makes the use of telescopic reel for installing the valve unnecessary.

The axis for assembling and positioning the butterfly component of the valve can be shifted over in a single or dual manner with respect to the sealing plane, allowing obtaining seat uniformity and preventing critical leakage points due to the discontinuities of contact pressure in the circumference of closure.

The valve further has the particularity that it includes, as an integral part thereof, a disassembling reel reducing costs and times with respect to the conventional valves lacking a reel and to which it is necessary to additionally incorporate the disassembling reel, whereas with the valve of the invention, since the reel is incorporated, assembling/disassembling operations, fastening elements such as screws, etc., are avoided.

The sealing and the rotation of the shaft on the valve body is performed by means of self-lubricating bushing assemblies (packings), said bushings being in an area sealed by the effect of O-rings, whereby it is possible to achieve perfect sealing of the body-bushing shaft assembly, in addition to a minimum coefficient of friction, so the operating torque in the valve is reduced.

On the other hand, it has been provided that by virtue of the special design of the configuration of the closure of the valve, it is possible to provide an addition or supplement of stainless-steel on the contact area of the butterfly component with the elastomer, thus achieving a longer elastomer life.

Another feature is that the cylinder-conical closure system enables the valve to withstand pressures of up to 100 bars on both sides of the butterfly component.

In terms of assembling and fastening the butterfly component, it will be performed by means of conical pins placed during assembly, thereby eliminating possible movements between the butterfly component and the shaft.

In terms of the actuation shaft itself, it is formed by two parts, one driving part and another guiding part, such that that it is driven by the corresponding operating element which can be a gear with a worm wheel system or another suitable actuation system, whereas the guiding part forms, as denoted by its name, a simple guide.

### Description of the Drawings

To complement the description that will be made in the following and for the purpose of aiding to better understand the features of the invention according to a preferred example of a practical embodiment thereof, a set of drawings is attached as an integral part of said description in which the following has been depicted with an illustrative and nonlimiting character:
Figure 1 shows a diametrical section view of the butterfly valve object of the invention.
Figure 2 shows a detailed section view of the way of assembling the elastomer gasket participating in the butterfly valve object of the invention.
Figure 3 shows a detailed section view corresponding to the self-lubricating bushings participating in the assembly of the rotating shaft of the valve.
Figure 4 shows a detailed section view of the possibility of providing the stainless-steel supplement to the contact area of the butterfly component with the corresponding elastomer.

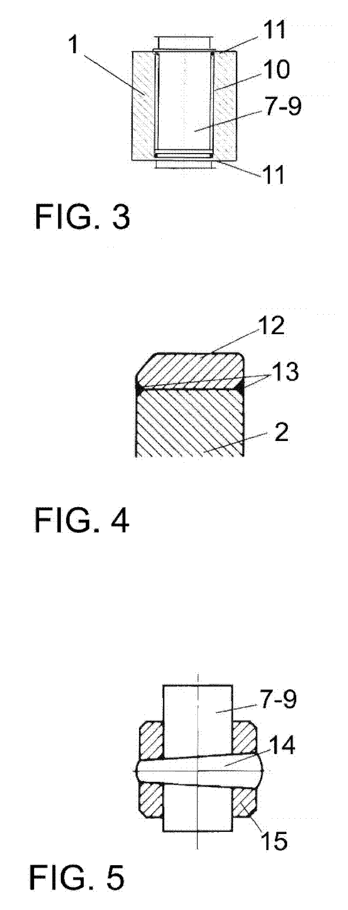

Finally, Figure 5 shows a detailed view of the fastening of the butterfly component to the corresponding shaft of the valve by means of a conical pin.

### Preferred Embodiment of the Invention

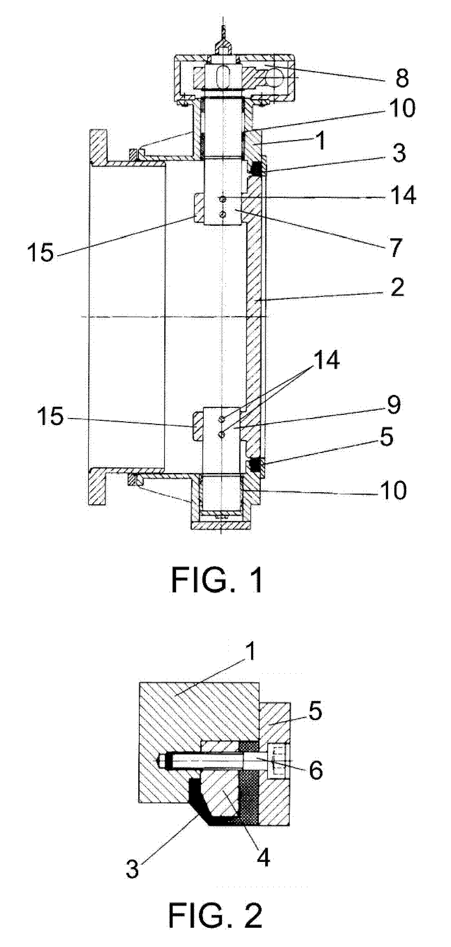

As can be seen in the referred drawings, the valve of the invention comprises a stainless-steel body (1), as well as the corresponding butterfly component (2), such that there is assembled on the valve body (1) the corresponding elastomer (3) as a sealing gasket for the closure of the butterfly component (2), an elastomer (3) which, as shown in Figure 2, has its support surface for the butterfly component (2) according to a inclined but completely smooth plane, being conveniently fixed on one side of the valve body (1), which allows replacing said elastomer (3) without needing to disassemble the valve and more importantly without needing tools or a qualified technician.

It can be seen in said Figure 2 how a metal core (4), a compensation ring (5) and a clamping screw (6) logically threading on the valve body (1) are involved in the fastening of the elastomer (3).

The drive shaft of the butterfly component (2) has two well differentiated parts, one part as a drive shaft (7) itself which is operated by an operating element (8), such as a gear with a worm wheel system or the like, whereas the other part is a guide shaft (9), the drive shaft (7) and guide shaft (9) both being assisted by packings formed by self-lubricating bushings (10) arranged in an area sealed by O-rings (11), as can be seen in detail in Figure 3.

On the other hand, it has been provided that the disc forming the butterfly component (2) itself can be complemented with an addition or supplement of stainless-steel material (12) which would be fixed by means of welding (13) in correspondence with the contact area between said butterfly disc (2) with the elastomer (3).

In terms of the fastening of the butterfly disc (2) to the shaft (7-9), it is performed by means of conical pins (14) logically passing through the corresponding shaft (7 or 9) and through the journal (15) of the valve disc (2) itself.

The described butterfly valve will integrate a disassembling reel resulting in valve assembly cost reduction with respect to the conventional valves of the same type since, on one hand, an approximately 33% saving of the amount of screws and washers necessary for assembling conventional valves is achieved with the incorporation or integration of the disassembling reel on the valve itself. Likewise, fewer planar sealing gaskets are required in the assembly, so cost reduction and of course valve start up and maintenance cost reductions are considerable.

Finally, it has to be mentioned that the described butterfly valve can be made according to operating requirements or as specified by client, with single or dual eccentricity, and both two-way systems.

## Claims

1. A butterfly valve being designed specially for the water transport and control sector, as well as for being able to be assembled in pumping stations, large tanks, water pipes and others, and comprising a stainless-steel valve body (1) and a butterfly disc (2) as closure element on an elastomer gasket (3) established in the valve body, **characterized in that** said elastomer gasket (3) has a supporting front for the completely planar and conical butterfly disc, said elastomer gasket being assembled on one side of the valve body, a metal core (4), a compensation ring (5) and a fastening screw (6) threaded on the valve body cooperating in the fastening, allowing the disassembling of the elastomer gasket without dismantling the valve and without needing tools or a qualified technician.

2. The butterfly valve according to claim 1, **characterized in that** the actuation shaft is formed by two parts, one part as a section of a drive shaft (7) linked with the corresponding operating element (8), such as a gear with a worm wheel system, and another part as a guide shaft (9), both parts of the shaft being fastened on respective journals of the butterfly disc through conical pins (14).

3. The butterfly valve according to the preceding claims, **characterized in that** the two parts of the actuation shaft of the valve include self-lubricating bushings (10) which are assembled in a sealed manner by means of O-rings (11) established at the ends.

4. The butterfly valve according to the preceding claims, **characterized in that** optionally the butterfly disc is susceptible of having a stainless-steel supplement incorporated and fixed therein by means of welding in its contact area with the corresponding elastomer gasket.
